# DEMANDE DE BREVET EUROPEEN

(11) **EP 0 551 042 A1**
(43) Date de publication de la demande: **14.07.1993**
(21) Numéro de dépôt: 92403567.8
(22) Date de dépôt: 29.12.1992
(51) Int. Cl.: B64C 25/00, B64C 25/58, F16F 9/46

(54) **Amortisseur de train d'atterrissage d'aéronef**

(30) Priorité: 07.01.1992 FR 9200073
(71) Demandeur: MESSIER BUGATTI, F-78140 Velizy Villacoublay (FR)
(72) Inventeur: Derrien, Michel, F-78000 Versailles (FR); Guyot, Bernard, F-77240 Seine Port (FR)
(74) Mandataire: Jaunez, Xavier

(57) **Abrégé**

L'invention concerne un amortisseur du type comportant un caisson et une tige coulissante, avec un fond mobile délimitant une chambre inférieure de fluide hydraulique qui communique, par l'intermédiaire d'un diaphragme, avec une chambre supérieure de fluide hydraulique adjacente à une chambre à gaz sous pression ménagée en partie haute du caisson.

Conformément à l'invention, un actionneur linéaire indépendant (130.1) est disposé dans la tige coulissante (102), coaxialement à celle-ci, en étant interposé entre le fond mobile (112) et une butée inférieure (126) solidaire de ladite tige coulissante, des moyens autonomes (150.1) étant en outre prévus pour la commande de l'actionneur linéaire, moyens dont l'enclenchement permet d'obtenir un rehaussement du train d'atterrissage lorsque l'aéronef est à l'arrêt au sol.

## Description

L'invention concerne les amortisseurs de trains d'atterrissage d'aéronefs, en particulier les trains relevables d'avions.

Il est connu de réaliser un amortisseur de train relevable d'avion, du type comportant un caisson et une tige coulissant dans ledit caisson, ladite tige comportant un fond fixe délimitant une chambre inférieure de fluide hydraulique qui communique, par l'intermédiaire d'un diaphragme, avec une chambre supérieure de fluide hydraulique adjacente à une chambre de gaz sous pression ménagée en partie haute du caisson.

Dans certaines situations, lorsque l'avion est à l'arrêt au sol, on souhaite pouvoir modifier l'assiette de l'avion, c'est-à-dire l'inclinaison de son axe longitudinal.

Une approche possible consiste alors à essayer de modifier la longueur du train avant, sans toucher aux atterrisseurs principaux : en effet, si l'on parvient à allonger le train avant, on peut obtenir l'assiette désirée de l'avion qui est à l'arrêt au sol.

Dans ce cas, il est intéressant de pouvoir disposer d'un train à rehaussement pour l'atterrisseur avant.

Il convient toutefois de ne pas confondre l'organisation d'un rehaussement du train lorsque l'avion est à l'arrêt au sol, avec la question d'un rehaussement visant à permettre à l'atterrisseur de rouler sur des sols irréguliers et même de franchir des obstacles de dimensions importantes. Dans le dernier cas, on cherche en effet à modifier la courbe isotherme de l'amortisseur (variations de l'effort amortisseur en fonction de la course d'enfoncement), par exemple en prévoyant une structure telle que l'amortisseur soit mono-chambre à l'atterrissage, et bi-chambre au roulage (après rehaussement), comme décrit dans le document FR-A-2.601.097.

L'amortisseur décrit dans ce document comporte ainsi un fond mobile délimitant supérieurement une chambre de gaz à haute pression qui est délimitée inférieurement par un piston dont la tige traverse le fond mobile, et une chambre inférieure de fluide hydraulique qui est délimitée par ce piston et le fond de la tige coulissante, et qui est alimentée par une source commandable reliée à la génération hydraulique de l'avion. La structure de cet amortisseur résulte de l'objectif recherché qui est le passage de bosses au roulage, de sorte qu'un tel amortisseur ne serait pas approprié pour la seule recherche d'un rehaussement statique du train lorsque l'avion est à l'arrêt au sol.

L'approche statique du rehaussement, pour un avion à l'arrêt au sol, consiste simplement à générer un effort équivalent à la charge statique de l'atterrisseur, afin de relever le caisson de l'amortisseur par rapport à la tige coulissante (cette dernière est en effet immobile, de sorte que l'allongement de l'amortisseur par sortie de sa tige coulissante se traduit par une remontée du caisson dudit amortisseur).

L'invention a pour objet de résoudre ce problème technique, en concevant un amortisseur dont la structure permette d'obtenir aisément un rehaussement du train lorsque l'avion est à l'arrêt au sol, sans exiger l'utilisation de la génération hydraulique de l'avion, c'est-à-dire sans exiger que les moteurs soient activés.

L'invention a aussi pour objet de réaliser un amortisseur de conception simple, pour lequel l'obtention d'un rehaussement soit aisément commandable, sans risque de perturbations et/ou de fuites au regard des circuits de la génération hydraulique de l'avion.

Il s'agit plus particulièrement d'un amortisseur de train d'atterrissage d'aéronef, comportant un caisson et une tige coulissant dans ledit caisson, avec un fond mobile délimitant une chambre inférieure de fluide hydraulique qui communique, par l'intermédiaire d'un diaphragme, avec une chambre supérieure de fluide hydraulique adjacente à une chambre de gaz sous pression ménagée en partie haute du caisson, caractérisé en ce qu'un actionneur linéaire indépendant est disposé dans la tige coulissante, coaxialement à celle-ci, en étant interposé entre le fond mobile et une butée inférieure solidaire de ladite tige coulissante, des moyens autonomes étant en outre prévus pour la commande dudit actionneur linéaire, dont l'enclenchement permet d'obtenir un rehaussement du train d'atterrissage lorsque l'aéronef est à l'arrêt au sol.

La commande autonome de cet actionneur linéaire indépendant permet ainsi de rehausser le train sans avoir à utiliser obligatoirement la génération avion.

Avantageusement, l'actionneur linéaire comporte un corps principal en appui contre la butée inférieure, et un organe mobile dont l'extrémité est au contact direct du fond mobile.

Si l'on veut privilégier avant tout la compacité de l'amortisseur, il est avantageux que le corps principal reçoive, dans sa partie inférieure, les moyens de commande de l'actionneur linéaire, de sorte que lesdits moyens sont dans ce cas intégrés dans la tige coulissante.

En variante, les moyens de commande sont disposés, au moins en partie, à l'extérieur de la tige coulissante, afin de faciliter une éventuelle intervention au sol sur lesdits moyens.

Conformément à un mode d'exécution particulier, l'actionneur linéaire est un vérin hydraulique dont la tige contacte directement le fond mobile.

Avantageusement dans ce cas, le vérin hydraulique comporte une tige-piston coulissant dans une chambre supérieure du corps principal du vérin, ledit corps principal présentant en outre une chambre inférieure dans laquelle sont prévues une réserve pressurisée de fluide hydraulique et une électro-pompe dont la sortie communique avec l'intérieur de la tige-piston.

Il est alors intéressant que le corps principal du vérin hydraulique comporte un bloc central délimitant les deux chambres dudit corps, ledit bloc central recevant des organes électro-hydrauliques associés à la commande de l'électro-pompe. En particulier, les organes électro-hydrauliques de commande comportent une électro-vanne qui est excitée pour un rehaussement du train d'atterrissage, et désexcitée pour un rabaissement dudit train.

Conformément à un autre mode d'exécution, l'actionneur linéaire est un actionneur électro-mécanique à système vis-écrou, dont la vis est bloquée axialement et dont l'écrou est solidaire d'une tige creuse qui contacte directement le fond mobile.

Avantageusement alors, la tige creuse coulisse dans une chambre supérieure du corps principal de l'actionneur électro-mécanique, ledit corps principal présentant en outre une chambre inférieure dans laquelle est reçu, au moins en partie, un ensemble moto-réducteur d'entraînement.

L'ensemble moto-réducteur d'entraînement peut être complètement intégré dans la tige coulissante si l'on cherche à obtenir une compacité optimale. En variante, le moteur de cet ensemble (et éventuellement aussi le réducteur associé) pourra être monté à l'extérieur de la tige coulissante, afin de faciliter une éventuelle intervention au sol sur ce moteur, sans avoir à amener l'avion au niveau d'une fosse ou à relever le nez de l'avion.

D'autres caractéristiques et avantages de l'invention apparaîtront plus clairement à la lumière de la description qui va suivre et des dessins annexés, concernant un mode de réalisation particulier, en référence aux figures où :
- la figure 1 est une coupe axiale d'un amortisseur conforme à l'invention, dans lequel l'actionneur linéaire est un vérin hydraulique, dont l'électro-pompe d'entraînement est ici intégrée dans le corps principal dudit vérin, la position illustrée correspondant à l'amortisseur détendu (sans charge statique) et non rehaussé ;
- les figures 2 et 3 illustrent le même amortisseur, tel qu'il se présente sous charge statique (avion à l'arrêt au sol), respectivement sans rehaussement et avec rehaussement ;
- la figure 4 illustre schématiquement les organes électro-hydrauliques associés à la commande du vérin de rehaussement de l'amortisseur précédent, lesdits organes étant en l'espèce logés dans un bloc central du corps principal dudit vérin ;
- la figure 5 est une coupe axiale d'une autre variante de l'amortisseur selon l'invention, dans laquelle l'actionneur linéaire est un actionneur électro-mécanique à système vis-écrou, dont l'ensemble moto-réducteur d'entraînement associé est ici intégré dans le corps principal dudit actionneur.

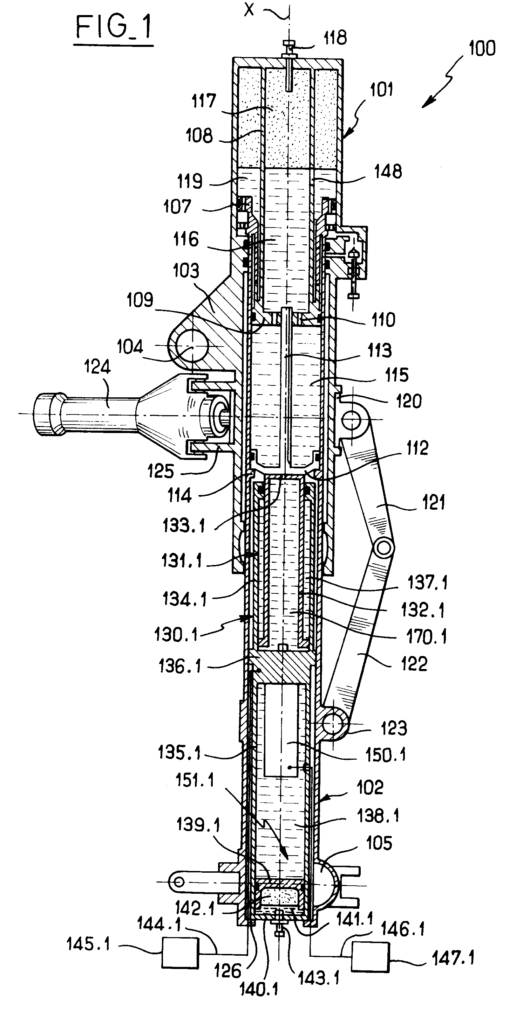

La figure 1 illustre un amortisseur 100 de train d'atterrissage d'aéronef conforme à l'invention, comportant un caisson 101 et une tige 102 coulissant dans ledit caisson, coaxialement à l'axe X de celui-ci. L'amortisseur 100 comporte tout d'abord un certain nombre d'organes de type conventionnel, dont la structure va être décrite succinctement ci-après.

Le caisson 101 comporte un axe d'articulation (non représenté) avec la structure de l'avion, et un appendice 103 correspondant à l'axe d'articulation 104 associé au dispositif de contre-ventement de l'amortisseur, car il s'agit ici d'un train d'atterrissage relevable. Des goussets 125 permettent l'articulation de deux vérins 124 commandant l'orientation du train de roues, la tige de ces vérins étant reliée à un manchon tournant 120 coaxial au caisson 101. Un compas assure les liaisons entre le manchon tournant 120 et la tige coulissante 102, ledit compas comportant un bras supérieur 121 et un bras inférieur 122, ce dernier étant articulé sur un appendice 123 solidaire de la tige coulissante 102. La tige coulissante 102 porte inférieurement un train de roues, et l'on distingue seulement ici le passage 105 associé à l'arbre correspondant.

La tige coulissante 102 s'étend vers le haut jusqu'à un élargissement supérieur 107, qui se déplace dans la partie supérieure du caisson 101. Le caisson 101 comporte en outre une tige plongeuse 108 dont le fond, référencé 109, coulisse dans la tige coulissante 102. Un fond mobile 112 délimite, avec le fond fixe 109 de la tige plongeuse 108, une chambre inférieure 115 de fluide hydraulique, ce fond 109 étant traversé en son centre par une tige 113 solidaire du fond mobile 112, et présentant, autour de celle-ci, des orifices de laminage 110 assurant la fonction diaphragme pour l'amortissement hydraulique, de façon conventionnelle. La chambre inférieure 115 de fluide hydraulique communique ainsi, par l'intermédiaire du diaphragme, avec une chambre supérieure 116 de fluide hydraulique adjacente à une chambre d'air sous pression 117, dont le gonflage est assuré par une valve 118. Les chambres 116 et 117 occupent ainsi l'intérieur de la tige plongeuse 108, en partie haute du caisson 101 de l'amortisseur, et un certain volume de fluide hydraulique 119 occupe la chambre annulaire entourant cette tige plongeuse 108, grâce à des orifices de communication 148.

Le fond mobile 112 repose sur une butée 114 solidaire de la tige coulissante 102, ledit fond étant en appui sur ladite butée lorsque l'amortisseur est détendu, conformément à la position illustrée sur la figure 1. Il peut cependant se déplacer axialement vers le haut, sur une course prédéterminée.

Conformément à un aspect essentiel de l'invention, un actionneur linéaire indépendant 130.1 est disposé dans la tige coulissante 102, coaxialement à celle-ci, en étant interposé entre le fond mobile 112 et une butée inférieure 126 solidaire de ladite tige coulissante, des moyens autonomes 150.1 étant en outre prévus pour la commande dudit actionneur linéaire, dont l'enclenchement permet d'obtenir un rehaussement du train d'atterrissage lorsque l'aéronef est à l'arrêt au sol.

La butée inférieure 126 est ici agencée au niveau de l'extrémité inférieure de la tige coulissante 102, afin de disposer d'un espace maximal pour loger l'actionneur linéaire 130.1.

Le caractère indépendant de l'actionneur linéaire 130.1 et le caractère autonome des moyens de commande associés 150.1 permettent d'obtenir un rehaussement, puis un rabaissement, du train d'atterrissage en toute indépendance de la génération hydraulique de l'avion, de sorte que le rehaussement et le rabaissement du train peuvent être obtenus sans qu'il soit nécessaire d'utiliser la génération de l'avion. Les caractères d'indépendance et d'autonomie précités permettent en outre d'éviter tout risque de perturbations et/ou de fuites au regard des circuits de la génération hydraulique de l'avion.

Le mode d'exécution illustré à la figure 1 comporte un actionneur linéaire 130.1 réalisé sous la forme d'un actionneur électro-hydraulique qui est ici un vérin hydraulique comportant un corps principal 131.1, et une tige mobile 132.1 dont l'extrémité libre 133.1 contacte directement le fond mobile 112. En l'espèce, le corps principal 131.1 est en appui contre la butée inférieure 126, et l'organe mobile du vérin, qui est la tige 132.1, est en appui direct contre le fond mobile 112. Il va de soi que l'on aurait pu en variante agencer le vérin hydraulique de façon renversée, avec sa tige en appui contre la butée inférieure de la tige coulissante 102, et son corps principal dont le fond serait en appui contre le fond mobile 112. Le mode de réalisation représenté ici présente cependant plusieurs avantages, dans la mesure où les commandes associées au fonctionnement de l'actionneur linéaire peuvent être regroupées en bas de la tige coulissante 102. Le vérin hydraulique 130.1 comporte en l'espèce une tige-piston 132.1 qui est ici creuse (ce qui n'est naturellement nullement obligatoire), et montée coulissante dans une chambre supérieure 137.1 du corps principal 131.1 du vérin. Cette chambre supérieure 137.1 est intérieure à une portion supérieure 134.1 du corps principal du vérin, qui se raccorde inférieurement à un bloc intermédiaire central 136.1. Le corps principal 131.1 du vérin comporte en outre une portion inférieure 135.1 s'étendant depuis le bloc central 136.1 jusqu'au fond 140.1 dudit corps principal. La portion inférieure 135.1 délimite ainsi une chambre inférieure 138.1 dans laquelle sont prévues une réserve pressurisée 151.1 de fluide hydraulique, et une électro-pompe 150.1 dont la sortie communique avec l'intérieur 170.1 de la tige-piston 132.1. La réserve pressurisée de fluide hydraulique 151.1 est de type conventionnel, et comporte un piston 139.1 délimitant inférieurement la chambre inférieure 138.1 qui est remplie de fluide hydraulique, piston en-dessous duquel on trouve une chambre de gaz sous pression 142.1 qui est directement adjacente à un volume 141.1 de fluide hydraulique, de façon à réaliser une réserve pressurisée évitant tout risque de cavitation de la pompe hydraulique 150.1. Le remplissage de la réserve pressurisée peut être aisément effectué par le fond du corps principal du vérin, à l'aide d'une valve de type conventionnel 143.1. On a également illustré sur la figure 1 les lignes électriques de raccordement associées à ces moyens de commande : on distingue ainsi la ligne 144.1 associée au bloc central 136.1 qui reçoit les organes électro-hydrauliques servant à la commande de l'électro-pompe 150.1, et la ligne 146.1 associée à la commande de cette électro-pompe 150.1. Ces lignes 144.1 et 146.1 sont accordées par des blocs de type connu 145.1 et 147.1 à la génération électrique de l'avion ou à une génération indépendante.

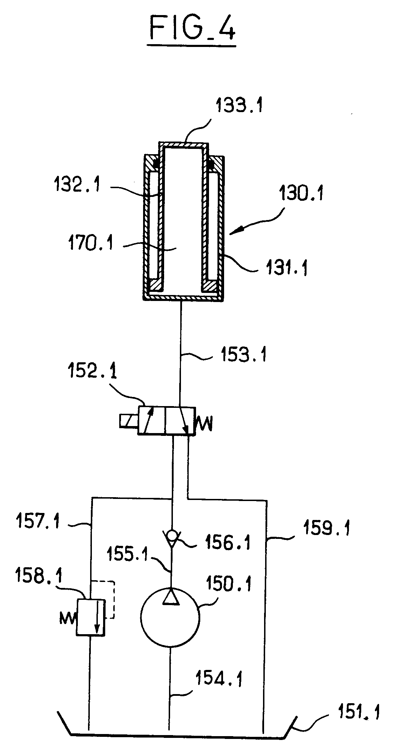

On va maintenant décrire les organes électro-hydrauliques associés à la commande de l'électro-pompe 150.1, lesquels organes sont essentiellement logés dans le bloc central 136.1 du corps principal 131.1. Ces organes électro-hydrauliques ont été représentés schématiquement sur la figure 4, dans un seul but de complétude de la description, dans la mesure où de tels organes sont de type conventionnels.

La figure 4 illustre ainsi, de manière schématique, le vérin hydraulique 130.1, avec son corps principal 131.1 et sa tige-piston coulissante 132.1 dont l'extrémité est notée 133.1. La liaison entre l'électro-pompe 150.1 et l'intérieur 170.1 de la tige 132.1 est assurée par une première ligne 155.1 comportant un clapet anti-retour 156.1, et arrivant sur une électro-vanne 152.1, en aval de laquelle on trouve une deuxième ligne 153.1. L'électro-pompe 150.1 est reliée à la réserve pressurisée de fluide hydraulique 151.1 par une ligne 154.1. Le retour hydraulique est assuré par une ligne 159.1 menant à la réserve pressurisée 151.1. La génération autonome est enfin complétée par une ligne 157.1 équipée d'un clapet de surpression 158.1. L'électro-vanne 152.1 assure, en position de repos, le retour vers la réserve pressurisée 151.1, conformément à la position illustrée sur la figure 4. Lorsque l'électro-vanne 152.1 est excitée et que l'électro-pompe 150.1 est activée, cette électro-pompe débite dans la tige mobile du vérin, le clapet 158.1 évitant tout risque de surpression dans cette alimentation.

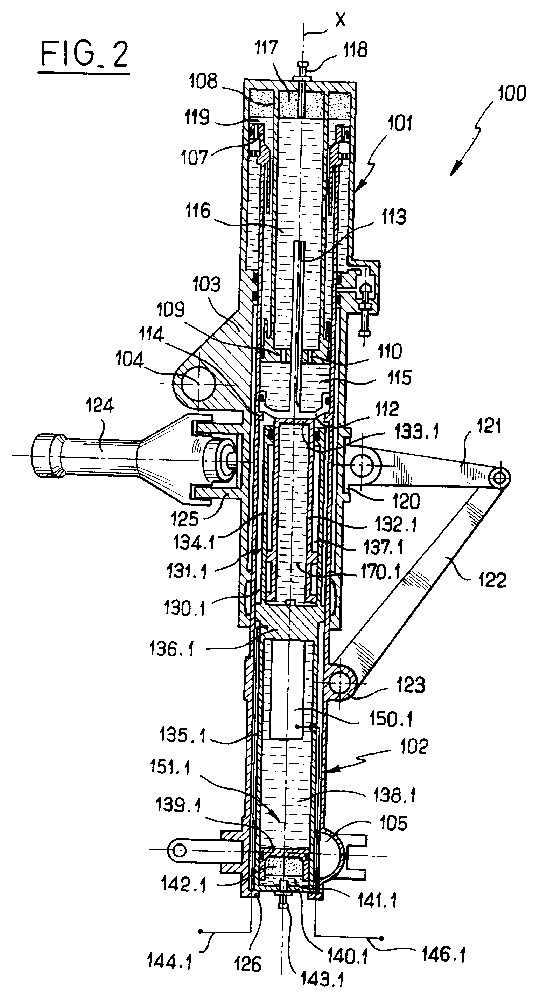

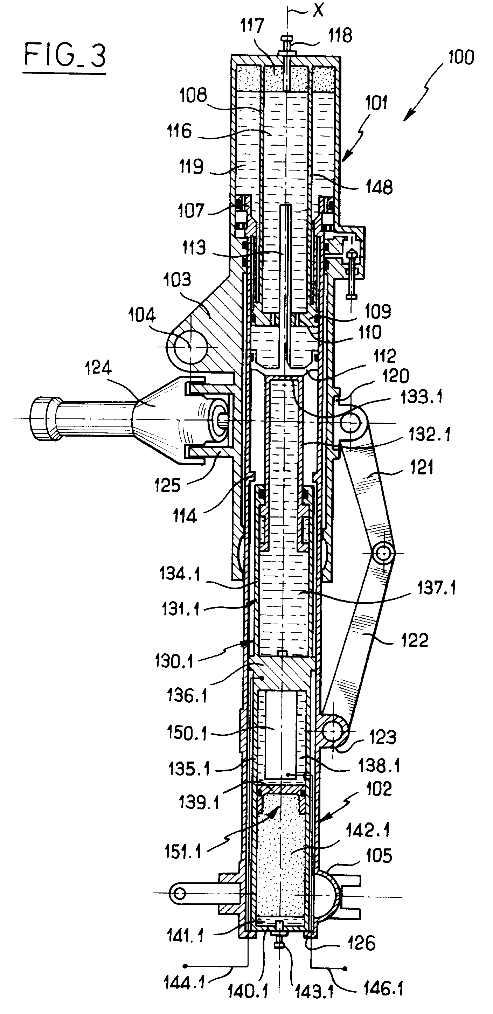

Ainsi que cela est visible sur la figure 2, lorsque l'amortisseur se trouve sous charge statique, c'est-à-dire lorsque l'avion est à l'arrêt au sol, la tige coulissante 102 a subi une course de rentrée dans le caisson 101, et la tige piston 132.1, qui est entraînée avec la tige coulissante 102, est encore rétractée et est au contact du fond mobile 112. Si maintenant on souhaite réaliser un rehaussement du train, il suffit d'exciter l'électro-vanne précitée 152.1 et d'activer l'électro-pompe 150.1 pour commander la sortie de la tige piston 132.1 de l'actionneur linéaire, cette tige-piston exerçant alors une poussée sur le fond mobile 112, laquelle poussée produit une sortie de la tige coulissante 102 de l'amortisseur, c'est-à-dire un soulèvement du caisson dudit amortisseur puisque la tige coulissante est en appui sur le sol par l'intermédiaire du train de roues, et par suite un rehaussement du train d'atterrissage. La figure 3 illustre ainsi l'amortisseur 100 sous charge statique, avec rehaussement, lequel rehaussement est ici maximal (tige-piston 132.1 en extension maximale hors du corps principal 131.1).

Il devient ainsi possible d'obtenir aisément une modification de l'assiette de l'avion, en jouant simplement sur la commande de l'électro-vanne et l'activation de l'électro-pompe associées à l'actionneur linéaire. Lorsque le rehaussement est devenu inutile, il suffit de désexciter l'électro-vanne, laquelle électro-vanne permet, par sa position de repos, un retour automatique par la charge statique exercée sur l'amortisseur, sans qu'il soit besoin de prévoir une commande particulière à cet effet. Après rabaissement, l'amortisseur revient alors à la position initiale qu'il occupait sous charge statique, c'est-à-dire conformément à l'illustration donnée en figure 2.

Ainsi que cela est visible sur les figures 1 à 3, le corps principal 131.1 de l'actionneur linéaire 130.1 reçoit, dans sa partie inférieure, les moyens de commande 150.1 de l'actionneur linéaire 130.1, de sorte que lesdits moyens sont dans ce cas intégrés dans la tige coulissante 102 : un tel agencement est particulièrement intéressant si l'on souhaite privilégier avant tout la compacité de l'amortisseur. Il est cependant possible de prévoir un agencement de l'électro-pompe 150.1 à l'extérieur du corps principal du vérin, c'est-à-dire à l'extérieur de la tige coulissante 102 (agencement non décrit ici) : dans ce cas, on obtiendra un avantage sur le plan de la maintenance, dans la mesure où le montage en extérieur facilite une éventuelle intervention au sol sur les moyens de commande. Lorsque l'électro-pompe est intégrée à la tige coulissante 102, il est en effet nécessaire, pour intervenir sur cette électro-pompe, de dégager la cartouche que constitue le vérin, ce qui nécessite l'amenée de l'avion au niveau d'une fosse ou la levée du nez de l'avion. En montant l'électro-pompe à l'extérieur de la tige coulissante 102, on perd peut-être en compacité, mais on facilite notablement les opérations de maintenance au sol.

Ainsi que cela est aisé à comprendre, l'utilisation d'un actionneur linéaire indépendant, avec des moyens de commande autonomes, permet d'obtenir une séparation parfaite des fonctions, de sorte que les fluides hydrauliques de l'amortisseur et du vérin de rehaussement sont totalement séparés, ce qui évite d'avoir à prévoir des joints d'étanchéité spéciaux à cet effet. En outre, l'indépendance du vérin permet une optimisation de celui-ci. Il est ainsi possible d'obtenir aisément un rehaussement de l'ordre de 300 mm avec un amortisseur du type précédemment décrit.

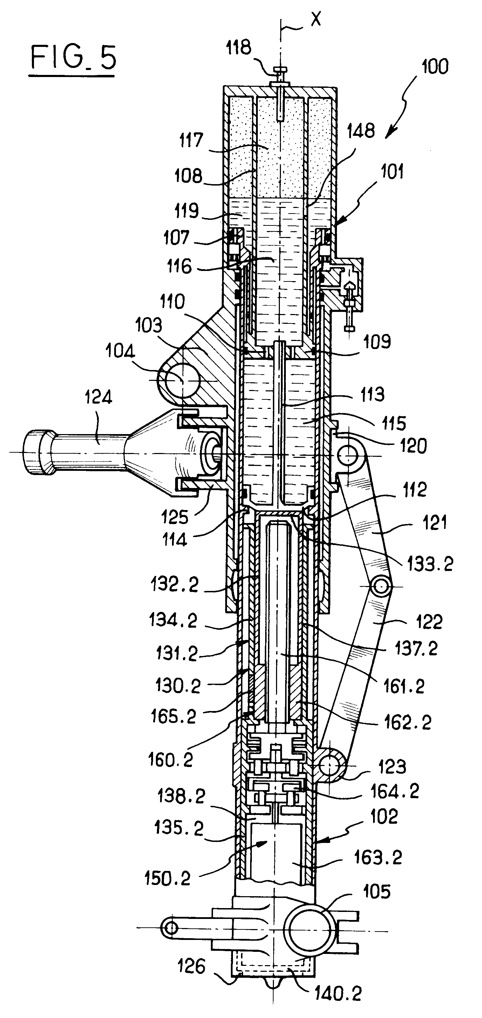

Il est naturellement possible de prévoir d'autres types d'actionneurs linéaires pour assurer la fonction de rehaussement, dans la mesure où l'actionneur utilisé est indépendant, et interposé entre le fond mobile 112 et la butée inférieure 126 solidaire de la tige coulissante 102. On a ainsi illustré à la figure 5 un autre amortisseur conforme à l'invention, dont l'actionneur linéaire n'est plus un actionneur électro-hydraulique du type vérin hydraulique, mais un actionneur électro-mécanique à système vis-écrou.

Les organes constitutifs de l'amortisseur 100 illustrés sur la figure 5 sont globalement les mêmes, à l'exception de l'actionneur linéaire utilisé. On a donc affecté ces organes des mêmes références que pour l'amortisseur déjà décrit en référence aux figures 1 à 3.

L'actionneur linéaire 130.2 est ainsi un actionneur électro-mécanique à système vis-écrou 160.2, dont la vis 161.2 est bloquée axialement, et dont l'écrou 162.2 est solidaire d'une tige creuse 132.2 qui contacte directement le fond mobile 112. L'actionneur électro-mécanique 130.2 comporte, là encore, un corps principal 131.2, dont la portion supérieure 134.2 reçoit la tige creuse 132.2 qui constitue l'organe mobile, coulissant axialement, de l'actionneur linéaire. L'écrou 162.2 du système vis-écrou est bloqué en rotation et guidé axialement par des organes 165.2 agencés dans la partie supérieure 134.2 du corps principal 131.2, de façon conventionnelle. L'extrémité terminale 133.2 de la tige creuse 132.2 est au contact du fond mobile 112, comme c'était le cas pour l'extrémité de la tige-piston de l'actionneur linéaire précédemment décrit et réalisé sous la forme d'un vérin hydraulique.

On utilisera de préférence, pour la vis 161.2, une vis à billes ou à rouleaux, conformément aux actionneurs électro-mécaniques utilisés dans le domaine de l'aéronautique pour d'autres commandes. La tige creuse 132.2 coulisse ainsi dans une chambre supérieure 137.2 du corps principal 131.2 de l'actionneur électro-mécanique 130.2, ledit corps principal présentant en outre une chambre inférieure 138.2, formant l'intérieur de la portion inférieure 135.2 dudit corps, chambre dans laquelle est reçu, ici en totalité, un ensemble moto-réducteur 150.2 d'entraînement. L'ensemble moto-réducteur comporte ainsi un moteur électrique 163.2, et un réducteur 164.2, qui est en l'espèce du type à deux étages épicycloïdaux et en sortie duquel est montée la vis à billes 161.2 du système vis-écrou.

Les moyens autonomes de commandes 150.2 sont là encore ici intégrés dans le corps principal 131.2 de l'actionneur linéaire 130.2. Il sera cependant possible, comme pour la variante précédemment décrite, d'agencer le moteur électrique 163.2, et éventuellement aussi le réducteur associé 164.2, à l'extérieur de la tige coulissante 102, afin de faciliter une éventuelle intervention au sol sur ces moyens.

Lorsque l'avion est à l'arrêt au sol, l'amortisseur, sous la charge statique, est dans une position correspondant à celle illustrée en figure 2 pour l'actionneur linéaire précédent. L'extrémité de la tige creuse 132.2 est cependant toujours au contact du fond mobile 112, de sorte que l'actionnement du moteur électrique 163.2 de l'actionneur linéaire provoque la sortie de la tige creuse 132.2, et permet d'obtenir le rehaussement désiré du train. Pour le rabaissement du train, il suffit d'inverser la commande du moteur électrique, ce qui ramène l'amortisseur à la position initiale qu'il occupait sous charge statique avant rehaussement. La position rehaussée est de préférence maintenue par un frein (non représenté) activé par la coupure de l'alimentation, installé à la sortie du moteur. Dans le cas où le système vis-écrou serait irréversible, la position haute serait alors maintenue par cette irréversibilité.

On est ainsi parvenu à réaliser un amortisseur dont la structure permet d'obtenir aisément un rehaussement du train lorsque l'avion est à l'arrêt au sol, sans exiger l'utilisation de la génération hydraulique de l'avion. L'amortisseur est en outre de conception simple, et l'obtention d'un rehaussement est aisément commandable, sans risque de perturbations et/ou de fuites au regard des circuits de la génération hydraulique de l'avion.

L'invention n'est pas limitée aux modes de réalisation qui viennent d'être décrits, mais englobe au contraire toute variante reprenant, avec des moyens équivalents, les caractéristiques essentielles énoncées plus haut.

## Revendications

1. Amortisseur de train d'atterrissage d'aéronef, comportant un caisson et une tige coulissant dans ledit caisson, avec un fond mobile délimitant une chambre inférieure de fluide hydraulique qui communique, par l'intermédiaire d'un diaphragme, avec une chambre supérieure de fluide hydraulique adjacente à une chambre de gaz sous pression ménagée en partie haute du caisson, caractérisé en ce qu'un actionneur linéaire indépendant (130.1 ; 130.2) est disposé dans la tige coulissante (102), coaxialement à celle-ci, en étant interposé entre le fond mobile (112) et une butée inférieure (126) solidaire de ladite tige coulissante, des moyens autonomes (150.1 ; 150.2) étant en outre prévus pour la commande dudit actionneur linéaire, dont l'enclenchement permet d'obtenir un rehaussement du train d'atterrissage lorsque l'aéronef est à l'arrêt au sol.

2. Amortisseur selon la revendication 1, caractérisé en ce que l'actionneur linéaire (130.1 ; 130.2) comporte un corps principal (131.1 ; 131.2) en appui contre la butée inférieure (126), et un organe mobile (132.1 ; 132.2) dont l'extrémité (133.1 ; 133.2) est au contact direct du fond mobile (112).

3. Amortisseur selon la revendication 2, caractérisé en ce que le corps principal (131.1 ; 131.2) reçoit, dans sa partie inférieure (135.1 ; 135.2), les moyens de commande (150.1 ; 150.2) de l'actionneur linéaire (130.1 ; 130.2), de sorte que lesdits moyens sont dans ce cas intégrés dans la tige coulissante (102).

4. Amortisseur selon la revendication 2, caractérisé en ce que les moyens de commande (150.1 ; 150.2) sont disposés, au moins en partie, à l'extérieur de la tige coulissante (102), afin de faciliter une éventuelle intervention au sol sur lesdits moyens.

5. Amortisseur selon l'une des revendications 1 à 4, caractérisé en ce que l'actionneur linéaire (130.1) est un vérin hydraulique dont la tige (132.1) contacte directement le fond mobile (112).

6. Amortisseur selon la revendication 5, caractérisé en ce que le vérin hydraulique (130.1) comporte une tige-piston (132.1) coulissant dans une chambre supérieure (137.1) du corps principal (131.1) du vérin, ledit corps principal présentant en outre une chambre inférieure (138.1) dans laquelle sont prévues une réserve pressurisée (151.1) de fluide hydraulique et une électro-pompe (150.1) dont la sortie communique avec l'intérieur (170.1) de la tige-piston (132.1).

7. Amortisseur selon la revendication 6, caractérisé en ce que le corps principal (131.1) du vérin hydraulique (130.1) comporte un bloc central (136.1) délimitant les deux chambres (137.1 ; 138.1) dudit corps, ledit bloc central recevant des organes électro-hydrauliques (152.1 ; 156.1; 158.1) associés à la commande de l'électro-pompe (150.1).

8. Amortisseur selon la revendication 7, caractérisé en ce que les organes électro-hydrauliques de commande comportent une électro-vanne (152.1) qui est excitée pour un rehaussement du train d'atterrissage, et désexcitée pour un rabaissement dudit train.

9. Amortisseur selon l'une des revendications 1 à 4, caractérisé en ce que l'actionneur linéaire (130.2) est un actionneur électro-mécanique à système vis-écrou (160.2), dont la vis (161.2) est bloquée axialement et dont l'écrou (162.2) est solidaire d'une tige creuse (132.2) qui contacte directement le fond mobile (112).

10. Amortisseur selon la revendication 9, caractérisé en ce que la tige creuse (132.2) coulisse dans une chambre supérieure (137.2) du corps principal (131.2) de l'actionneur électro-mécanique (130.2), ledit corps principal présentant en outre une chambre inférieure (138.2) dans laquelle est reçu, au moins en partie, un ensemble motoréducteur (150.2) d'entraînement.
